# EUROPÄISCHE PATENTSCHRIFT

(11) **EP 1 877 214 B1**
(45) Veröffentlichungstag und Bekanntmachung des Hinweises auf die Patenterteilung: **17.07.2013**
(21) Anmeldenummer: 06753485.9
(22) Anmeldetag: 04.05.2006
(51) Int. Cl.: B23C 3/05, B23B 29/03

(54) **DREHVERFAHREN**
TURNING METHOD
PROCEDE DE TOURNAGE

(30) Priorität: 04.05.2005 DE 102005021886
(43) Veröffentlichungstag der Anmeldung: 16.01.2008
(73) Patentinhaber: MAS GmbH, 71229 Leonberg (DE)
(72) Erfinder: MOERK, Thomas, 71272 Renningen (DE)
(74) Vertreter: Steil, Christian
(86) Internationale Anmeldenummer: PCT/EP2006/004174
(87) Internationale Veröffentlichungsnummer: WO 2006/117213

(56) Entgegenhaltungen:
- EP-A- 0 571 818
- GB-A- 979 803
- US-A- 3 999 452
- US-A- 4 519 125
- US-A- 4 531 867
- US-A- 4 923 343
- PATENT ABSTRACTS OF JAPAN Bd. 1998, Nr. 03, 27. Februar 1998 (1998-02-27) -& JP 09 285909 A (AMADA CO LTD), 4. November 1997 (1997-11-04)
- PATENT ABSTRACTS OF JAPAN Bd. 2002, Nr. 06, 4. Juni 2002 (2002-06-04) -& JP 2002 052414 A (NISSAN MOTOR CO LTD), 19. Februar 2002 (2002-02-19)

## Beschreibung

Die vorliegende Erfindung betrifft ein Verfahren zum spanenden Bearbeiten eines Werkstückes durch einen Dreh-Bearbeitungsschritt.

Insbesondere betrifft die vorliegende Erfindung Drehverfahren zur Bearbeitung sehr kleiner Werkstücke, die zwei rotationssymmetrische Flächen aufweisen, wobei die zwei rotationssymmetrischen Flächen an einem Übergang unter einem Winkel größer Null aneinander angrenzen und wobei an dem Übergang eine möglichst gratfreie Kante auszubilden ist.

Als ein Beispiel eines solchen Werkstückes sei ein Ventilsitz für ein Kraftstoffeinspritzsystem genannt. Derartige Systeme weisen Kanäle und Ventilsitze mit sehr geringen Abmessungen auf, um Kraftstoff unter hohem Druck einspritzen zu können. Ferner spielt bei solchen Bauteilen auch die Ausbildung der Kanten an den genannten Übergängen eine wichtige Rolle, da an solchen Kanten die Gefahr von Verwirbelungen und folglich Effizienzverlusten besteht.

Derartige Kanten sollen daher im Wesentlichen gratfrei ausgebildet sein, und zwar häufig mit einer sehr geringen Toleranz von z.B. 0,002 mm (2 µm).

Zur spanenden Bearbeitung von Werkstücken, insbesondere metallischen Werkstücken, mit derart geringen Toleranzen stehen nur wenige Verfahren zur Verfügung. Wenn man die entsprechenden Flächen vorab grob ausbildet, beispielsweise durch Drehen, Fräsen oder Bohren, kann eine Feinbearbeitung zur Erzielung der notwendigen Toleranzen durchgeführt werden. Typischerweise können solche Toleranzen durch Schleifen erzielt werden, also durch Werkzeuge mit geometrisch unbestimmter Schneide. Bei den erforderlichen sehr kleinen Abmessungen ist das Schleifen jedoch nicht immer einfach zu bewerkstelligen, insbesondere dann, wenn die Kante in einer Ausnehmung ausgebildet ist, wie beispielsweise zur Bildung eines Ventilsitzes. Ferner ist es aufgrund der winklig zueinander liegenden Flächen in der Regel notwendig, aufwändige Maßnahmen zur Änderung der Relativlage zwischen Werkstück und Werkzeug zu schaffen.

Bei anderen Herstellungsverfahren, wie Bohren, Fräsen etc., sind die Werkzeuge häufig nicht in der Lage, die hohen Toleranzen ohne Nachbearbeitung zu erfüllen.

Aus der JP 09 285909 A ist ein Drehverfahren zum spanenden Bearbeiten eines Werkstückes bekannt, wobei das Werkstück eine erste rotations-symmetrische Fläche und eine sich daran anschließende zweite Fläche aufweist, die senkrecht zu der Rotationsachse ausgerichtet ist, wobei am Übergang von der ersten zu der zweiten Fläche eine Kante vorzusehen ist, mit dem Dreh-Bearbeitungsschritt, ein Werkzeug, das eine erste Schneide und eine in Umfangsrichtung versetzt hierzu angeordnete zweite Schneide aufweist, parallel zu der Rotationsachse vorzuschieben, wobei in einer ersten Phase des Bearbeitungsschrittes die zweite Fläche ausgehend von dem Übergang mittels der zweiten Schneide gedreht wird und wobei in der zweiten Phase des Bearbeitungsschrittes die erste Fläche mittels der ersten Schneide gedreht wird, und zwar während ein Arbeitsschritt der zweiten Schneide den Bereich der zweiten Fläche benachbart zu dem Übergang dreht.

Das der Erfindung zugrunde liegende technische Problem besteht folglich darin, an einem Werkstück zwei zueinander winklig ausgerichtete rotationssymmetrische Flächen, wobei eine der rotationssymetrischen Flächen Kreiszylindrisch ist, mit einer hohen Genauigkeit zu bearbeiten, insbesondere im Bereich des Übergangs zwischen den Flächen, und zwar mit möglichst wenig Bearbeitungsschritten.

Diese Aufgabe wird gelöst durch ein Verfahren zum spanenden Bearbeiten eines Werkstückes nach Anspruch 1.

Mit dem erfindungsgemäßen Drehverfahren ist es möglich, einen gratfreien oder im Wesentlichen gratfreien Übergang zwischen den zwei benachbarten rotationssymmetrischen Flächen zu erzielen, und zwar mit möglichst wenig Bearbeitungsschritten. Insbesondere kann die Bearbeitung der Flächen und des Übergangs erfolgen, indem das Werkzeug in einer Richtung vorgeschoben wird. Hierdurch ist insbesondere eine hochpräzise Führung des Werkzeuges möglich, was zum Einhalten von engen Toleranzen förderlich ist.

Zur Durchführung des Verfahrens wird das Werkstück vorzugsweise in einer Spindel eingespannt und in Drehung versetzt. Das Werkzeug wird in Vorschubrichtung relativ zu dem Werkstück vorgeschoben. Generell ist es jedoch auch möglich, das Werkstück starr einzuspannen und das Werkzeug in Rotation zu versetzen. Auch kann es gegebenenfalls notwendig sein, das Werkzeug zusätzlich in einer Kreisbewegung um eine Längsachse des Werkstückes herum zu bewegen.

Insgesamt kann das erfindungsgemäße Verfahren als Längsdrehverfahren bezeichnet werden.

Insgesamt kann mit dem erfindungsgemäßen Verfahren erreicht werden, auch bei sehr kleinen Werkstücken Übergänge zwischen rotationssymmetrischen Flächen im Wesentlichen gratfrei auszubilden, und zwar mit sehr geringen Toleranzen von beispielsweise 0,002 mm (2 µm).

Die Aufgabe wird somit vollkommen gelöst.

Ferner ist es vorteilhaft, wenn die erste Schneide so ausgebildet und während der zweiten Phase des Bearbeitungsschrittes so ausgerichtet ist, dass die erste Schneide die erste Fläche ganzflächig dreht.

Die zweite Schneide ist folglich eine Profildrehschneide, bei der die Form der zweiten Fläche von der zweiten Schneide vorgegeben wird

Nach einer weiteren bevorzugten Ausführungsform steht die zweite Schneide in der zweiten Phase das Bearbeitungsschrittes entgegen der Vorschubrichtung gegenüber dem Übergang vor.

Hierdurch wird gewährleistet, dass die zweite Schneide einen beispielsweise durch die erste Schneide erzeugten Grat quasi gleichzeitig wieder entfernen kann.

Ferner ist es vorteilhaft, wenn die erste Schneide in der zweiten Phase des Bearbeitungsschrittes in Vorschubrichtung gegenüber dem Übergang vorsteht.

Auch hierbei wird gewährleistet, dass ein durch die zweite Schneide erzeugter Grat quasi gleichzeitig durch die erste Schneide wieder entfernt wird.

Insgesamt ist es bevorzugt, wenn die erste Fläche eine Kegelfläche ist.

Bei dieser Ausführungsform eignet sich das Drehverfahren insbesondere zur Herstellung von Ventilsitzen.

Ebenfalls ist es von Vorteil, wenn die erste Fläche und die zweite Fläche Innenflächen einer Ausnehmung des Werkstückes sind, wobei die erste Fläche an ihrem einen Ende eine Öffnung der Ausnehmung bildet.

Bei dieser Ausführungsform liegt der Übergang im Inneren der Ausnehmung des Werkstückes, so dass die Vorteile des erfindungsgemäßen Drehverfahrens besonders zum Tragen kommen können. Denn andere spanende Verfahren, die ähnliche Oberflächengüten erzielen könnten, sind für die Innenbearbeitung häufig nicht geeignet oder nur mit hohem apparativem Aufwand realisierbar.

Alternativ ist es jedoch auch möglich, dass die erste Fläche und die zweite Fläche Außenflächen des Werkstückes sind. Ausführungsbeispiele der Erfindung sind in der Zeichnung dargestellt und werden in der nachfolgenden Beschreibung näher erläutert. Es zeigen:
- Fig. 1: eine schematische Längsschnittansicht eines Drehwerkzeuges zur Innenbearbeitung, und zwar in einer zweiten Phase eines Bearbeitungsschrittes des erfindungsgemäßen Drehverfahrens;
- Fig. 2: eine Detailansicht II von Fig. 1;
- Fig. 3: eine schematische Längsschnittansicht einer abgewandelten Ausführungsform des Drehwerkzeuges der Fig. 1;
- Fig. 4: eine schematische Längsschnittansicht einer alternativen Ausführungsform eines Drehwerkzeuges zur Innen- und Außenbearbeitung; und
- Fig. 5: eine schematische Längsschnittansicht einer weiteren alternativen Ausführungsform eines Drehwerkzeuges zur Außenbearbeitung.

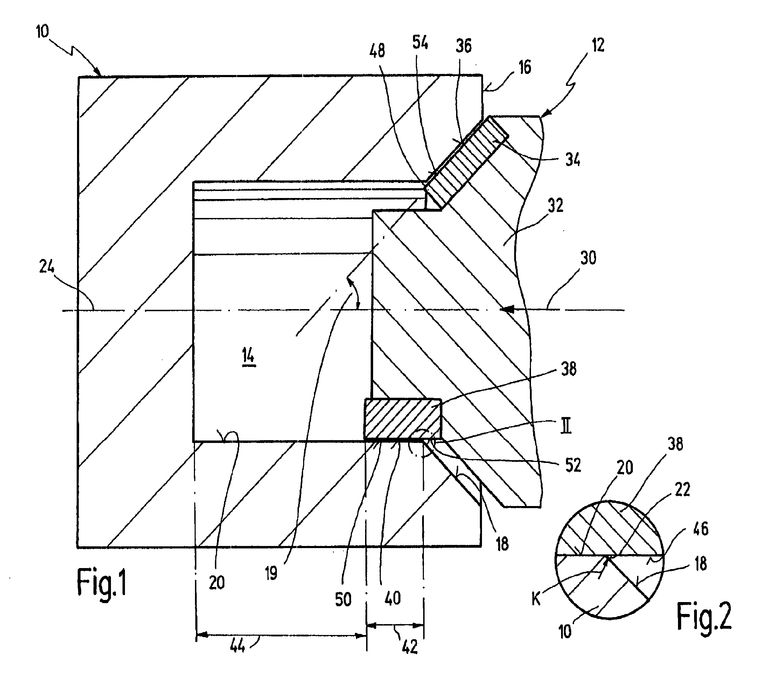

In Fig. 1 und 2 ist ein mittels des erfindungsgemäßen Drehverfahrens zu bearbeitendes Werkstück generell mit 10 bezeichnet.

Das Werkstück 10 ist in der Regel aus Metall (beispielsweise Stahl) und dient im vorliegenden Fall als Ventilsitzanordnung für eine Kraftstoffeinspritzanlage.

Das Werkstück 10 ist bei dem erfindungsgemäßen Drehverfahren mittels eines Drehwerkzeuges zu bearbeiten, das in Fig. 1 generell mit 12 bezeichnet ist.

Das Werkstück 10 weist eine Ausnehmung 14 auf, die hier als Sackloch ausgehend von einer Stirnseite 16 des Werkstückes 10 ausgebildet ist.

Die Ausnehmung 14 beinhaltet eine axiale Bohrung, die zur Stirnseite 16 hin mit einer Ansenkung versehen ist.

Im Bereich der Ansenkung weist die Ausnehmung 14 folglich eine erste kegelförmige rotationssymmetrische Fläche 18 auf, die die Ansenkung bildet und unter einem Kegelwinkel 19 in Bezug auf eine Längsachse (Rotationsachse) 24 des Werkstückes 10 ausgerichtet ist.

Die sich im Inneren der Ausnehmung 14 anschließende Bohrung bildet eine zweite rotationssymmetrische Fläche 20, im vorliegenden Fall in Form einer kreiszylindrischen Fläche.

Ein Übergang zwischen der ersten rotationssymmetrischen Fläche 18 und der zweiten rotationssymmetrischen Fläche 20 ist mit 22 bezeichnet.

Die Flächen 18, 20 bilden im Bereich des Überganges 22 eine Kante K.

Das Werkzeug 12 wird in einer Vorschubrichtung 30 vorgeschoben, die mit der Rotationsachse 24 zusammenfällt. In der gezeigten Ausführungsform ist die Rotationsachse 24 ferner eine Längsachse des Werkzeuges 12.

Das Werkzeug 12 weist einen Halter 32 auf, an dem eine erste Schneideplatte 34 sowie eine zweite Schneideplatte 38 festgelegt sind. Die zwei Schneideplatten 34, 38 sind in Umfangsrichtung versetzt zueinander angeordnet, vorzugsweise um etwa 180° versetzt.

Die erste Schneideplatte 34 weist eine erste Schneide 36 auf, die dazu ausgelegt ist, die erste Fläche 18 zu bearbeiten. Die zweite Schneideplatte 38 weist eine zweite Schneide 40 auf, die dazu ausgelegt ist, die zweite Fläche 20 zu bearbeiten.

Die zweite Schneide 40 ist parallel zu der Vorschubrichtung 30 ausgerichtet, so dass die zweite Fläche 20 bei Vorschub des Werkzeuges 12 rundgedreht wird. Genauer gesagt kann die zweite Schneide 40 als Breitschlicht-Runddrehschneide ausgebildet sein.

Die erste Schneide 36 ist so an dem Halter 32 festgelegt, dass sie sich in axialer Richtung mit der zweiten Schneide 40 überlappt. Ferner ist die erste Schneide 36 in Bezug auf die Vorschubrichtung 30 unter dem Kegelwinkel 19 ausgerichtet und weist eine solche Länge auf, dass sie die erste Fläche 18 ganzflächig bearbeiten kann. Die erste Schneide 36 ist demzufolge als Profildrehschneide ausgebildet.

Von der zweiten Fläche 20 wird nur eine an die erste Fläche 18 angrenzende Bearbeitungsfläche 42 mittels des Werkzeuges 12 (mittels der zweiten Schneide 40) bearbeitet. Der weiter in die Ausnehmung 14 hineinreichende Teil der zweiten Fläche 20 wird nicht bearbeitet und ist bei 44 dargestellt.

Die Bearbeitung der zwei Flächen 18, 20 erfolgt in einem Bearbeitungsschritt mit einem einzigen Vorschub und ist im Wesentlichen in zwei Phasen aufgeteilt.

In einer ersten Phase des Vorschubes wird die zweite Fläche 20 (genauer die Bearbeitungsfläche 42) ausgehend von dem Übergang 22 in Richtung in das Innere der Ausnehmung 14 bearbeitet, und zwar durch axiales Runddrehen. Die zweite Schneide 40 ist dabei so ausgebildet, dass nicht nur ihre vordere Ecke an dem Material des Werkstückes angreift, sondern auch die nachfolgende Schneidkante der zweiten Schneide 40.

Während dieser ersten Phase ist die erste Schneide 36 beabstandet von der ersten Fläche 18, und es erfolgt keine Bearbeitung der ersten Fläche 18.

In der zweiten Phase des Bearbeitungsschrittes kommt die erste Schneide 36 ganzflächig in Anlage an die erste Fläche 18 und bearbeitet diese. Dieser Zustand ist in Fig. 1 dargestellt.

In der in Fig. 1 gezeigten Position, bei der die erste Schneide 36 die erste Fläche 18 bearbeitet, steht von der zweiten Schneide 40 ein Bereich 46 nach hinten, entgegen der Vorschubrichtung 30 vor. Zum anderen ist die erste Schneideplatte 34 so ausgebildet, dass in dem gezeigten Zustand die erste Schneide 36 einen Bereich 48 aufweist, der nach vorne in Vorschubrichtung 30 vorsteht.

Diese Ausgestaltung hat den Vorteil, dass die Kante K im Wesentlichen gratfrei erzeugt werden kann. Denn ein von der ersten Schneide 36 im Bereich des Übergangs 22 eventuell erzeugter Grat wird nach Drehung des Werkstückes 10 um den Umfangsversatzwinkel der zwei Schneiden 36, 40 (üblicherweise 180°) unmittelbar von der zweiten Schneide 40 entfernt. Umgekehrt wird ein von der zweiten Schneide 40 erzeugter Grat unmittelbar nach der Drehung um den Umsatzversatzwinkel, d.h. quasi gleichzeitig, von der ersten Schneide 36 entfernt.

Sobald die zweite Phase des Bearbeitungsschrittes abgeschlossen ist, wird das Werkzeug 12 entgegen der Vorschubrichtung 30 zurückgezogen. Die Bearbeitung des Werkstückes 10 ist abgeschlossen, und die Kante K im Bereich des Überganges 22 ist im Wesentlichen gratfrei geformt, und zwar unter Einhaltung sehr kleiner Toleranzen, die im Bereich von 2 µm liegen können.

Es versteht sich jedoch, dass das erfindungsgemäße Drehverfahren auch für deutlich größere Toleranzen geeignet ist, und auch für Werkstücke 10 mit größeren Abmessungen.

Die zweite Schneideplatte 38 weist einen vorderen, in die Ausnehmung 14 hinein ragenden Bereich 50 und einen hinteren Bereich 52 auf, der dem Bereich 46 entsprechen kann.

Das oben dargestellte erfindungsgemäße Drehverfahren kann auch als Längsausspindeln bezeichnet werden.

Obgleich bei dem erfindungsgemäßen Drehverfahren in der Regel das Werkstück 10 gedreht wird, um die Rotationsachse 24, versteht sich, dass bei koaxialer Ausrichtung der Rotationsachse 24 und der Längsachse des Werkzeuges 12 auch das Werkzeug 12 um diese Achse gedreht werden kann, während das Werkstück 10 fest eingespannt ist.

Es ist ebenfalls denkbar, dass das Werkzeug 12 zwei Schneiden 36, 40 aufweist, deren radialer Abstand nicht den zu bearbeitenden Flächen 18, 20 entspricht, sondern deutlich kleiner ist als diese. In diesem Fall könnte beispielsweise das Werkzeug 12 in Drehung versetzt werden, und zusätzlich auf einer Kreisbahn entlang der Kante K verfahren werden. Diese Ausführungsform des erfindungsgemäßen Drehverfahrens ist jedoch aufgrund des größeren apparativen Aufwandes weniger bevorzugt.

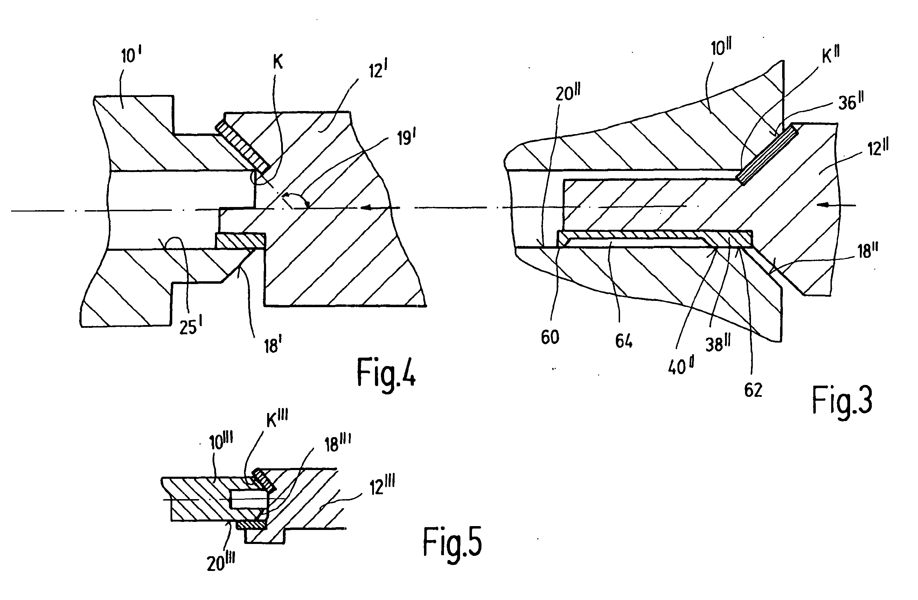

In Fig. 4 ist eine alternative Ausführungsform eines Drehwerkzeuges 12' gezeigt, mit dem zwei Flächen 18', 20' bearbeitet werden können, die spitzwinklig zueinander ausgerichtet sind. Dabei ist die zweite Fläche 20' als Bohrung ausgebildet, und die erste Fläche 18' ist als Außenkegelfläche ausgebildet. Der entsprechende Kegelwinkel 19' (Übergangswinkel) ist demzufolge ein stumpfer Winkel.

In Fig. 3 ist eine weitere alternative Ausführungsform gezeigt, die auf der Ausführungsform des Drehwerkzeuges 12 der Fig. 1 basiert. Bei dieser abgewandelten Ausführungsform eines Drehwerkzeuges 12" ist die zweite Schneideplatte 38 " mit einem vorderen Bereich 60 ausgebildet, und mit einem hinteren Bereich 62. Zwischen dem vorderen Bereich 60 und dem hinteren Bereich 62 weist die zweite Schneideplatte 38'' einen hinterschnittenen Bereich 64 auf, der nicht mit der zweiten Fläche 20" in Berührung kommt.

Diese Ausführungsform eignet sich insbesondere zur Bearbeitung relativ tiefer Ausnehmungen. Dabei dient der vordere Bereich 60 der zweiten Schneide 40 als Runddrehmeißel, und der hintere Bereich 62 dient zum Breitschlicht-Runddrehen im Bereich des Überganges 22. Vereinfacht gesagt dient der zweite, hintere Bereich 62 im Wesentlichen dazu, den Übergang 22 und folglich die Kante K'' im Wesentlichen gratfrei auszubilden, gemeinsam mit der ersten Schneide 36'', die genauso ausgebildet ist wie bei dem Werkzeug 12 der Fig. 1.

In Fig. 5 ist eine Ausführungsform gezeigt, bei der ein Werkzeug 12''' ausschließlich zur Außenbearbeitung eingesetzt wird.

Eine erste Fläche 18''' ist als Außenkegelfläche ausgebildet, und die zweite Fläche 20''' ist als Außenfläche eines Zylinders oder Ähnlichem ausgebildet.

Die zwei in Fig. 5 nicht näher bezeichneten Schneiden sind entsprechend ausgerichtet, die generelle Funktionsweise insbesondere hinsichtlich des gratfreien Drehens der Kante K''' ist jedoch die gleiche wie bei den zuvor beschriebenen Ausführungsformen.

Generell versteht sich, dass die zwei Flächen 18, 20 unter beliebigen Winkeln zueinander ausgerichtet sein können.

Auch kann zumindest die erste Fläche 18 von einer geraden Form abweichende Formen besitzen, da sie im Profildrehverfahren bearbeitet wird. Es versteht sich, dass die erste Schneide 36 dann eine entsprechende Form aufweisen muss.

Zur gratfreien Bearbeitung ist es jedoch bei allen Ausführungsformen von besonderem Vorteil, wenn sich die zwei Schneiden 36, 40 axial überlappen bzw. in der zweiten Phase des Bearbeitungsschrittes jeweils einen gegenüber der Kante K vorstehenden Bereich besitzen, so dass eine gegenseitige Gratentfernung der zwei Schneiden 36, 40 möglich ist.

## Patentansprüche

1. Drehverfahren zum spanenden Bearbeiten eines Werkstückes (10), wobei das Werkstück (10) eine rotationssymmetrische erste Fläche (18) und eine sich daran konzentrisch anschließende zweite Fläche (20) aufweist, wobei am Übergang (22) von der ersten (18) zu der zweiten Fläche (20) eine Kante (K) vorzusehen ist, mit dem Dreh-Bearbeitungsschritt, ein Werkzeug (12), das eine erste Schneide (36) und eine in Umfangsrichtung versetzt hierzu angeordnete zweite Schneide (40) aufweist, parallel zu der Rotationsachse (24) vorzuschieben, wobei in einer ersten Phase des Bearbeitungsschrittes die zweite Fläche (20) ausgehend von dem Übergang (22) mittels der zweiten Schneide (40) gedreht wird und wobei in einer zweiten Phase des Bearbeitungsschrittes die erste Fläche (18) mittels der ersten Schneide (36) gedreht wird, und zwar während ein Abschnitt (40; 62) der zweiten Schneide (40) den Bereich der zweiten Fläche (20) benachbart zu dem Übergang (22) dreht, **dadurch gekennzeichnet, dass** die zweite Fläche (20) kreiszylindrisch ist und dass die zweite Schneide (40) während des Bearbeitungsschrittes parallel zu der Rotationsachse (24) ausgerichtet ist.

2. Drehverfahren nach Anspruch 1, wobei die erste Schneide (36) so ausgebildet und während der zweiten Phase des Bearbeitungsschrittes so ausgerichtet ist, dass die erste Schneide (36) die erste Fläche (18) ganzflächig dreht.

3. Drehverfahren nach einem der Ansprüche 1 oder 2, wobei die zweite Schneide (40) in der zweiten Phase des Bearbeitungsschrittes entgegen der Vorschubrichtung (30) gegenüber dem Übergang (22) vorsteht.

4. Drehverfahren nach einem der Ansprüche 1 bis 3, wobei die erste Schneide (36) in der zweiten Phase des Bearbeitungsschrittes in Vorschubrichtung (30) gegenüber dem Übergang (22) vorsteht.

5. Drehverfahren nach einem der Ansprüche 1 bis 4, wobei die erste Fläche (18) eine Kegelfläche (18) ist.

6. Drehverfahren nach einem der Ansprüche 1 bis 5, wobei die erste Fläche (18) und die zweite Fläche (20) Innenflächen einer Ausnehmung (14) des Werkstückes (10) sind, wobei die erste Fläche (18) an ihrem einen Ende eine Öffnung der Ausnehmung (14) bildet.

7. Drehverfahren nach einem der Ansprüche 1 bis 5, wobei die erste Fläche (18'") und die zweite Fläche (20"') Außenflächen des Werkstückes (10"') sind.

## Claims

1. Turning method for machining a workpiece (10), wherein the workpiece (10) has a rotationally symmetrical first surface (18) and a second surface (20) adjoining the latter concentrically, wherein an edge (K) is to be provided at the transition (22) from the first surface (18) to the second surface (20), and, with the turning machining step, a tool (12) which has a first cutting edge (36) and a second cutting edge (40) arranged offset with respect thereto in the circumferential direction is to be advanced parallel to the axis of rotation (24), wherein, in a first phase of the machining step, the second surface (20) is turned from the transition (22) by means of the second cutting edge (40), and wherein, in a second phase of the machining step, the first surface (18) is turned by means of the first cutting edge (36), specifically while a portion (40; 62) of the second cutting edge (40) turns the region of the second surface (20) adjacent to the transition (22), **characterized in that** the second surface (20) is circular-cylindrical, and **in that**, during the machining step, the second cutting edge (40) is oriented parallel to the axis of rotation (24).

2. Turning method according to claim 1, wherein the first cutting edge (36) is designed in such a manner and, during the second phase of the machining step, is oriented in such a manner that the first cutting edge (36) turns the first surface (18) entirely.

3. Turning method according to claims 1 or 2, wherein, in the second phase of the machining step, the second cutting edge (40) protrudes counter to the advancing direction (30) in relation to the transition (22).

4. Turning method according to any of claims 1 to 3, wherein, in the second phase of the machining step, the first cutting edge (36) protrudes in the advancing direction (30) in relation to the transition (22).

5. Turning method according to any of claims 1 to 4, wherein the first surface (18) is a conical surface (18).

6. Turning method according to any of claims 1 to 5, wherein the first surface (18) and the second surface (20) are internal surfaces of a recess (14) of the workpiece (10), wherein one end of the first surface (18) forms an opening in the recess (14).

7. Turning method according to any of claims 1 to 5, wherein the first surface (18"') and the second surface (20"') are outer surfaces of the workpiece (10"').

## Revendications

1. Procédé de tournage pour l'usinage par enlèvement de copeaux d'une pièce (10), dans lequel la pièce (10) présente une première surface à symétrie de révolution (18) et une deuxième surface (20) s'y raccordant de manière concentrique, une arête (K) étant prévue au niveau de la transition (22) de la première (18) à la deuxième (20) surface, avec l'étape d'usinage par tournage, pour faire avancer un outil (12) qui présente un premier tranchant (36) et un deuxième tranchant (40) disposé de manière décalée par rapport au premier tranchant dans la direction périphérique, parallèlement à l'axe de rotation (24), la deuxième surface (20), dans une première phase de l'étape d'usinage, étant tournée au moyen du deuxième tranchant (40) à partir de la transition (22), et dans une deuxième phase de l'étape d'usinage, la première surface (18) étant tournée au moyen du premier tranchant (36), et ce pendant qu'une portion (40 ; 62) du deuxième tranchant (40) fait tourner la région de la deuxième surface (20) adjacente à la transition (22), **caractérisé en ce que** la deuxième surface (20) est cylindrique circulaire et **en ce que** le deuxième tranchant (40), pendant l'étape d'usinage, est orienté parallèlement à l'axe de rotation (24).

2. Procédé de tournage selon la revendication 1, dans lequel le premier tranchant (36) est réalisé de telle sorte, et pendant la deuxième phase de l'étape d'usinage, est orienté de telle sorte, que le premier tranchant (36) fasse tourner la première surface (18) sur toute sa surface.

3. Procédé de tournage selon l'une quelconque des revendications 1 ou 2, dans lequel le deuxième tranchant (40) fait saillie par rapport à la transition (22) à l'encontre de la direction d'avance (30) dans la deuxième phase de l'étape d'usinage.

4. Procédé de tournage selon l'une quelconque des revendications 1 à 3, dans lequel le premier tranchant (36) fait saillie par rapport à la transition (22) dans la direction d'avance (30) dans la deuxième phase de l'étape d'usinage.

5. Procédé de tournage selon l'une quelconque des revendications 1 à 4, dans lequel la première surface (18) est une surface conique (18).

6. Procédé de tournage selon l'une quelconque des revendications 1 à 5, dans lequel la première surface (18) et la deuxième surface (20) sont des surfaces internes d'un évidement (14) de la pièce (10), la première surface (18) formant, à l'une de ses extrémités, une ouverture de l'évidement (14).

7. Procédé de tournage selon l'une quelconque des revendications 1 à 5, dans lequel la première surface (18"') et la deuxième surface (20"') sont des surfaces extérieures de la pièce (10"').
